# EUROPÄISCHE PATENTANMELDUNG

(11) **EP 1 603 072 A1**
(43) Veröffentlichungstag der Anmeldung: **07.12.2005**
(21) Anmeldenummer: 04012995.9
(22) Anmeldetag: 02.06.2004
(51) Int. Cl.: G06K 9/20

(54) **Verfahren und Einrichtung zur Strukturanalyse eines Dokuments**

(71) Anmelder: CCS Content Conversion Specialists GmbH, 22087 Hamburg (DE)
(72) Erfinder: Tiede, Ralph, 35423 Lich (DE)
(74) Vertreter: Regelmann, Thomas

(57) **Zusammenfassung**

Es wird ein Verfahren zur Strukturanalyse eines Dokuments vorgeschlagen, bei dem eine Vorlage in elementare Struktureinheiten zerlegt wird und ausgehend von diesen elementaren Struktureinheiten generische Objekte erzeugt werden, denen eine oder mehrere Eigenschaften zugeordnet werden, wobei mittels der generischen Objekte eine die Vorlage abbildende Struktur in elektronischem Format erzeugt wird.

## Beschreibung

Die Erfindung betrifft ein Verfahren zur Strukturanalyse eines Dokuments.

Ferner betrifft die Erfindung eine Einrichtung zur automatischen Strukturanalyse von Dokumenten.

Um Dokumente elektronisch speichern zu können, müssen von einer Vorlage elektronische Daten erzeugt werden, sofern solche Daten nicht bereits vorliegen. Bei gedruckten Dokumenten muß dazu die Vorlage gescannt werden. Für die Speicherung der resultierenden Scanndaten ist eine hoher Speicheraufwand nötig. Weiterhin ist eine direkte Auswertung dieser Daten nicht möglich. Es ist deshalb wünschenswert, nur die relevanten Datenelemente der Vorlage, wie beispielsweise Text zu speichern, wobei dann auch eine elektronische Auswertung möglich ist. Der Text muß aber aus den Scanndaten gewissermaßen herausgefiltert werden; es ist dann eine Strukturanalyse des Dokuments durchzuführen.

Es sind Layout-Strukturanalyseverfahren insbesondere für Zeitungsseiten bekannt, mittels derer gedruckte Zeitungsseiten in einem elektronischen Format speicherbar sind. Beispielsweise ist aus der EP 0 629 078 ein Verfahren zur Verarbeitung eines Vorlagenbildes bekannt, bei dem die digitale Bildpunktinformation gewonnen wird, die das Bild repräsentiert und dann ein automatisches Segmentieren dieser digitalen Bildpunktinformation in Layoutelemente erfolgt. Das Bild wird an eine Bedienungsperson zur Auswahl eines oder mehrerer Layoutelemente, die im Segmentierungsschritt gefunden wurden, dargeboten. Weiterhin wird wenigstens eine Übertragungsoperation zur Auswahl durch eine Bedienungsperson dargeboten, um ein Layoutelement an einen anderen Ort übertragen zu können. Die digitalen Bildpunktinformationen, die ein ausgewähltes Layoutelement repräsentiert, werden dann über Übereinstimmung mit einer ausgewählten Übertragungsoperation verarbeitet.

Aus der EP 0 753 833 B1 ist ein Verfahren zum automatischen Verarbeiten eines Dokumentenbildes, das mehrere Artikel enthält, etwa einer Zeitungsseite, bekannt, bei dem Bilddaten in elementare Bestandteile eines Bildes segmentiert werden. Diese Objekte werden dann als zu einem von mehreren möglichen Objekttypen typifiziert und es werden gegenseitige Positionsbeziehungen zwischen den Objekten aus den Bilddaten extrahiert. Die Objekte des Bildes werden anschließend in einen Artikel klassifiziert, wobei ein vorgegebener Satz von Regeln auf diese Objekte angewandt wird, die Typen und gegenseitige Positionsbeziehungen zur gegenseitiger Zusammengehörigkeit in Beziehung setzen.

Der Erfindung liegt die Aufgabe zugrunde, ein Verfahren und eine Einrichtung zur Strukturanalyse eines Dokuments zu schaffen, mittels welchem beziehungsweise welcher sich auf flexible Weise eine Strukturanalyse eines Dokuments durchführen läßt.

Diese Aufgabe wird erfindungsgemäß dadurch gelöst, daß eine Vorlage in elementare Struktureinheiten zerlegt wird und ausgehend von diesen elementaren Struktureinheiten generische Objekte erzeugt werden, denen eine oder mehrere Eigenschaften zugeordnet werden, wobei mittels der generischen Objekte eine die Vorlage abbildende Struktur in elektronischem Format erzeugt wird.

Dadurch, daß generische Objekte vorgesehen sind, welche nicht "starr" definiert sind, sondern denen eine oder mehrere Eigenschaften zugeordnet werden und insbesondere beliebig zugeordnet werden können, ist ein System bereitgestellt, das sich unter geringem Aufwand an eine Vielzahl von Vorlagen anpassen läßt, wobei grundsätzlich keine Einschränkung bezüglich der Vorlage besteht. Die Vorlage kann beispielsweise in gedrucktem Format oder bereits in elektronischem Format vorliegen.

Wenn eine Vorlage bestimmte Besonderheiten enthält, dann kann durch entsprechende Definition von generischen Objekten das System flexibel angepaßt werden, um eine Strukturanalyse des entsprechenden Dokuments durchführen zu können.

Das Dokument wird zunächst in elementare Struktureinheiten zerlegt, die den Ausgangspunkt für das weitere Verfahren darstellen. Die elementaren Struktureinheiten können je nach Dokumententyp verschieden sein. Bei einem gedruckten Dokument kann es sich bei den elementaren Struktureinheiten um Pixeldaten handeln, während bei einem elektronischen Textdokument die elementaren Struktureinheiten ganze Buchstaben oder ganze Wörter sein können. Von diesen elementaren Struktureinheiten ausgehend werden die generischen Objekte erzeugt, und darauf basierend dann wiederum eine die Vorlage abbildende Struktur in elektronischem Format erzeugt. Durch Definition der generischen Objekte insbesondere über die Zuordnung von Eigenschaften wird dann ein flexibles System bereitgestellt, das an jede Art von Vorlage anpaßbar ist, um entsprechend eine Strukturanalyse jeder Art von Vorlage durchführen zu können.

Mittels der erfindungsgemäßen Lösung kann eine Layout-Analyse beispielsweise von Zeitungsseiten durchgeführt werden. Es lassen sich auch Bücher analysieren. Ferner können strukturierte Dokumente wie Patentschriften, Verträge oder Tabellen analysiert werden und in ein elektronisches Format gebracht werden. Es ist auch möglich, Dokumente, die bereits in einem elektronischen Formar vorliegen, wie beispielsweise Web-Seiten, zu analysieren und in eine Struktur zu bringen, die weniger Speicherplatz benötigt als die ursprüngliche Seite und dabei einer beispielsweise inhaltlichen Analyse zugänglich ist. Ferner lassen sich Findbücher, Kataloge, Telefonbücher und dergleichen mittels der erfindungsgemäßen Verfahrens in eine elektronisches Format bringen.

Der grundsätzliche Ansatzpunkt für die Strukturanalyse eines Dokuments ist die optische Struktur der Vorlage. Ausgehend von dieser optischen Struktur lassen sich dann insbesondere Textzusammenhänge und Bildzusammenhänge erkennen, um so wiederum die abbildende Struktur zu erzeugen.

Es kann auch zusätzlich oder alternativ eine inhaltliche Analyse erfolgen, die wiederum über die generischen Objekte zugänglich ist. Erfindungsgemäß läßt sich Layout-Analyse und Content-Analyse verknüpfen.

Günstig ist es, wenn den elementaren Struktureinheiten eine oder mehrere Eigenschaften zugeordnet werden; insbesondere werden den elementaren Struktureinheiten Positionswerte zugeordnet.

Bei den Eigenschaften, welche den generischen Objekten und/oder den elementaren Struktureinheiten zugeordnet werden, handelt es sich insbesondere um Ordnung und/oder Bedeutung und/oder Hierarchie im optischen Erscheinungsbild der Vorlage. Es lassen sich dann Zusammenhänge zwischen elementaren Struktureinheiten ermitteln, um so wiederum eine die Vorlage abbildende Struktur in elektronischem Format zu erzeugen, die jedoch einen geringeren Speicherbedarf benötigt als der Speicherbedarf für die elementaren Struktureinheitsdaten in der Gesamtheit.

Ganz besonders vorteilhaft ist es, wenn die Eigenschaft oder Eigenschaften, welche einem generischen Objekt zugeordnet werden, definierbar sind. Dadurch läßt sich ein entsprechendes System auf einfache Weise an einen bestimmten Vorlagentyp anpassen beziehungsweise das System ist nicht auf einen oder wenige Vorlagetypen beschränkt. Die Modifikation läßt sich auf einfache Weise durchführen, ohne daß das gesamte System neu programmiert werden muß. Da die Anpassung auf der Ebene der generischen Objekte stattfindet, auf deren Grundlage die die Vorlage abbildende Struktur erzeugt wird, ist eine hohe Flexibilität des Systems erreicht.

Es kann dabei insbesondere vorgesehen sein, daß einem generischen Objekt eine logische Funktionalität zugeordnet wird, welche die Funktion des Objekts in dem Dokument charakterisiert. Beispielsweise kann es sich bei dem Objekt um ein Textobjekt handeln, welches Textelemente enthält. Die zugeordnete Funktion ist dann beispielsweise Überschrift, Einleitung, Zwischentitel oder dergleichen insbesondere im Bezug auf einen Artikel der Dokumentenvorlage. Die Funktion wiederum kann als Eigenschaft des generischen Objektes definiert werden.

Günstig ist es, wenn die logische Funktionalität durch Schriftgröße von Textelementen und Position der Textelemente, welche von dem generischen Objekt umfaßt werden, bestimmt wird und insbesondere allein durch Schriftgröße und Position bestimmt wird. Für diese Textelemente sind eben Schriftgröße und Position die wesentlichen Kriterien bezüglich der Funktion der Textelement im Gesamttext. Graphisches "Beiwerk" wie Linien und Nicht-Text-Graphiken können als Objekte der Schriftgröße "Null" betrachtet werden. Auf Grundlage der generischen Objekte läßt sich dann unter Berücksichtigung der logischen Funktionalität der Objekte hierarchisch die Struktur der Dokumentenvorlage abbilden.

Günstig ist es, wenn die Anzahl der zugeordneten Eigenschaften definierbar ist, um so eine hohe Flexibilität zu erreichen.

Aus dem gleichen Grund ist es günstig, wenn die Art einer zugeordneten Eigenschaft definierbar ist.

In diesem Zusammenhang ist es dann auch besonders günstig, wenn einem generischen Objekt oder einer elementaren Struktureinheit beliebige zusätzliche Eigenschaften zugeordnet werden können. Dadurch besteht die Möglichkeit, das System auf einfache Weise an unterschiedlichste Vorlagentypen anpassen zu können, ohne daß eine grundlegende Neuprogrammierung notwendig ist.

Eine einem generischen Objekt zugeordnete Eigenschaft umfaßt eine Artkomponente für die Art der Eigenschaft und eine Wertkomponente für den Wert der Eigenschaft. Dadurch lassen sich dann Operationen an den generischen Objekten durchführen, um beispielsweise die generischen Objekte zu klassifizieren und/oder um neue generische Objekte zu erzeugen.

Günstig ist es dann, wenn an oder mit elementaren Struktureinheiten und/oder generischen Objekten Operationen durchgeführt werden, um so ausgehend von elementaren Struktureinheiten eine die Vorlagen abbildende Struktur zu erhalten, die in elektronischem Format vorliegt.

An oder mit den elementaren Struktureinheiten und/oder generischen Objekten wird eine oder mehrere der Operationen Selektion, Attributierung, Gruppierung, Aufteilung, Sortierung, Hierarchiebildung oder Konturermittlung durchgeführt, um so die abbildende Struktur zu erzeugen.

Ganz besonders vorteilhaft ist es, wenn ausgehend von den elementaren Struktureinheiten die die Vorlage abbildende Struktur hierarchisch erzeugt wird. Es handelt sich dann um ein "Bottom up"-Verfahren, bei dem die Vorlage abhängig vom Vorlagetyp in kleinste elementare Struktureinheiten zerlegt wird und davon ausgehend eine die Vorlage abbildende Struktur hierarchisch erzeugt wird. Während des Vorgangs der hierarchischen Abbildung werden unnötige Elemente, wie beispielsweise graphische Elemente bei Textvorlagen, eliminiert. Die erzeugte Struktur in elektronischem Format läßt sich dann bezüglich des benötigten Speicherplatzes optimieren. Es werden insbesondere die für eine Auswertung des Dokuments nicht benötigten Dokumentenelemente eliminiert.

Es ist vorgesehen, daß hierarchisch übergeordnete Objekte durch eine oder mehrere der Operationen Selektion, Attributierung, Gruppierung, Aufteilung, Sortierung, Hierarchiebildung oder Konturermittlung aüs hierarchisch untergeordneten Objekten erzeugt werden.

Ganz besonders vorteilhaft ist es, wenn Operationen bezüglich der elementaren Struktureinheiten und/oder der generischen Objekte mittels durch ein Skript definierte Teilschritte durchgeführt werden. Dadurch ist eine hohe Flexibilität des Systems erreicht, da das Skript auf einfache Weise erweiterbar ist, um so beispielsweise neue Vorlagetypen erfassen zu können.

Das Skript ist in einer oder mehreren Skriptdatenbanken gespeichert. Dadurch ist gewährleistet, daß das Skript auf einfache Weise erweiterbar ist, so daß wiederum auf einfache Weise neue Operation bezüglich der elementaren Struktureinheiten und/oder der generischen Objekte kreiert werden können, ohne daß eine Umprogrammierung des Systems notwendig ist.

Es kann vorgesehen sein, daß ein Skript in Klassen aufgeteilt wird. Dadurch wird zusätzlich für eine Flexibilität des Systems gesorgt.

Es können auch parameterabhängige Skripte vorgesehen sein, wobei die Ausführung dann abhängig von einem Parameter ist. Auch hierdurch wird für eine hohe Flexibilität gesorgt.

Es kann ein generisches Objekt vom Typ "Kollektion" vorgesehen sein, welches andere Objekte aufnehmen kann. Beispielsweise ist ein solches generisches Objekt ein Satzobjekt, welches Wortbestandteile des Satzes aufnehmen kann.

Weiterhin kann ein generisches Objekt vom Typ "Container" vorgesehen sein, welches Objekte einer gleichen Kategorie beinhaltet. Beispielsweise kann ein solches Objekt Absätze eines Artikels aufnehmen.

Es kann ein generisches Objekt vom Typ "Speicher" vorgesehen sein, welches Daten aufnimmt und bereitstellt.

Es kann auch ein generisches Objekt vom Typ "Dokument" vorgesehen sein, welches eine Vorlage spezifiziert.

Auch ein generisches Objekt vom Typ "Seite" kann vorgesehen sein, welches eine Seite der Vorlage charakterisiert.

Es kann ein generisches Objekt vom Typ "Bildsegment" definiert sein, welches sich auf zusammenhängende Folgen von Pixeln innerhalb einer Bildseite bezieht.

Es ist möglich, daß die Vorlage eine gedruckte Vorlage ist. Elektronische Vorlagedaten zur Weiterverarbeitung werden dann insbesondere über einen Scannvorgang erzeugt. In diesem Falle sind dann die elementaren Struktureinheiten, auf deren Grundlage eine weitere Verarbeitung durchgeführt wird, Pixeldaten.

Es ist auch möglich, Vorlagen in einem elektronischen Format wie Web-Seiten durch das erfindungsgemäße Verfahren zu bearbeiten. Erfindungsgemäß ist es dann vorgesehen, daß Vorlagedaten durch einen virtuellen Druckertreiber erzeugt werden. Auch in einem elektronischen Dokument sind die einzelnen Vorlagenelemente nach optischen Kriterien angeordnet. Ein Druckertreiber erzeugt eine Abbildung einer Vorlage nach optischen Kriterien. Durch den erfindungsgemäßen "virtuellen Druckertreiber" werden dem System Vorlagedaten in elektronischem Format bereitgestellt, die auf optischen Kriterien (wie bei einem Druckvorgang) beruhend erzeugt wurden. Es ist keine Konversion der Vorlage in ein anderes Format notwendig, sondern es werden eben "virtuelle Druckdaten" erzeugt, deren wesentliches Merkmal die optische Anordnung der entsprechenden Elemente in der Dokumentenvorlage ist.

Die elementaren Struktureinheiten von mittels eines virtuellen Druckertreibers erzeugten Vorlagedaten liegen zumindest teilweise oberhalb einer Pixelebene, da die optischen Informationen zumindest bezüglich Textelementen auf einer höheren Ebene als der Pixelebene vorliegen. Beispielsweise können ganze Buchstaben als solche erkannt werden und auch Wörter und sogar Sätze als solche erkannt werden. Diese entsprechenden Elemente sind dann die elementaren Struktureinheiten, auf deren Grundlage die weitere Verarbeitung stattfindet. Es können zusätzlich Pixeldaten erzeugt werden, um beispielsweise die Daten leichter anzeigen zu können. Jedoch kann bezüglich der durch den virtuellen Druckertreiber erzeugten Vorlagedaten zumindest für Textelemente auf einer höheren Ebene in der Hierarchie für die Weiterverarbeitung eingestiegen werden als es der Pixelebene entspricht. Dadurch läßt sich die Verarbeitung schneller durchführen, da Verarbeitungsschritte eingespart werden können.

Es ist günstig, wenn für ein Objekt eine Konturermittlung durchgeführt wird, um so beispielsweise den Speicherbedarf minimieren zu können.

Es ist möglich, um das Objekt ein Rechteck als Kontur zu legen. Es ist auch möglich, um das Objekt einen Rechteckblock, welcher sich aus einer Mehrzahl von Rechtecken zusammensetzt, als Kontur zu legen.

Weiterhin ist es möglich, um das Objekt eine konvexe Hülle als Kontur zu legen.

Es kann auch eine Abrollkontur um das Objekt gelegt werden.

Günstig ist es, wenn nach einem Scannvorgang einer Vorlage Schwarz/Weiß-Bilder in Graubilder umgewandelt werden. Dadurch ist es möglich, gerasterte Hintergründe als Hintergründe zu erkennen und zu separieren.

Es ist auch günstig, wenn zu Ermittlung von Vordergrund und Hintergrund Graubilder mit gleichem oder ähnlichem Grauwert verglichen werden. Es lassen sich so Zellen, die eine stark abweichende Helligkeit haben, beispielsweise als Vordergrund werten.

Die eingangs genannte Aufgabe wird bei einer Einrichtung zur automatischen Strukturanalyse von Dokumenten erfindungsgemäß dadurch gelöst, daß eine Zerlegungseinrichtung zur Zerlegung einer Vorlage in elementare Struktureinheiten vorgesehen ist und eine Strukturerzeugungseinrichtung zur Erzeugung einer die Vorlage abbildende Struktur in elektronischem Format vorgesehen ist, wobei die Strukturerzeugungseinrichtung eine Einrichtung zum Erzeugen von generischen Objekten, welchen eine oder mehreren Eigenschaften zugeordnet sind oder werden, und zur Durchführung von Operationen an oder mit den generischen Objekten und/oder den elementaren Struktureinheiten umfaßt.

Diese Einrichtung zur automatischen Strukturanalyse von Dokumenten ist insbesondere geeignet zur Durchführung des erfindungsgemäßen Verfahrens.

Sie weist die bereits im Zusammenhang mit dem erfindungsgemäßen Verfahren erläuterten Vorteile auf.

Weitere vorteilhafte Ausführungsformen wurden ebenfalls bereits im Zusammenhang mit dem erfindungsgemäßen Verfahren erläutert.

Die Erfindung betrifft ferner ein Computerprogramm-Produkt mit mindestens einem computerlesbaren Medium und einem auf dem mindestens einen computerlesbaren Medium gespeicherten Computerprogramm mit Programmcodemitteln, die dazu geeignet sind, bei Ablauf des Computerprogramms auf einem oder mehreren Computern das erfindungsgemäße Verfahren auszuführen.

Ferner betrifft die Erfindung ein Computerprogramm mit Programmcodemitteln, die dazu geeignet sind, bei Ablauf des Computerprogramms auf einem oder mehreren Computern das erfindungsgemäße Verfahren auszuführen.

Die nachfolgende Beschreibung bevorzugter Ausführungsformen dient im Zusammenhang mit der Zeichnung der näheren Erläuterung der Erfindung. Es zeigen:
- Figur 1: eine schematische Blockbilddarstellung einer erfindungsgemäßen Einrichtung zur automatischen Strukturanalyse von Dokumenten;
- Figur 2: eine Blockbilddarstellung eines Ausführungsbeispiels einer erfindungsgemäßen Einrichtung;
- Figur 3: schematisch die Schritte der Grauwandlung, Separierung, Ermittlung von gerasterten Texten und Ermittlung von Grauhintergründen bei einer Zeitungsseite als Vorlage;
- Figur 4: schematisch den Aufbau eines generischen Objekts und Beispiele für generische Objekte;
- Figur 5: beispielhafte Ablaufschemata für die Strukturanalyse von Bilddateien und von elektronischen Dokumenten und
- Figur 6(a) bis (d): Beispiele für die Konturermittlung von Objekten.

Die erfindungsgemäße Einrichtung zur automatischen Strukturanalyse von Dokumente und das erfindungsgemäße Verfahren zur Strukturanalyse eines Dokuments dient insbesondere zur Layout-Analyse von Dokumenten. Es lassen sich dadurch beispielsweise Zeitungsseiten analysieren, um insbesondere Artikel zu erkennen und diese dann elektronisch zugänglich zu machen. Es lassen sich auch Bücher analysieren; diese lassen sich insbesondere in Kapitel und Unterkapitel gliedern. Weiterhin lassen sich Metadaten wie Vorwort, Impressum, Autor, Herausgeber, Copyright-Vermerk und dergleichen erkennen. Es lassen sich auch strukturierte Dokumente wie Patentschriften, Verträge oder Tabellen analysieren. Es ist auch möglich, Dokumente, die in einem elektronischen Format vorliegen, wie beispielsweise Web-Seiten, zu analysieren, wobei insbesondere eine Trennung zwischen Inhalt und Bannern ermöglicht ist. Es lassen sich ferner Findbücher, Kataloge, Telefonbücher und ähnliche Dokumente lesen und in ein elektronisches Format bringen. Ein Findbuch ist ein buchartiges Inhaltsverzeichnis eines Archivs.

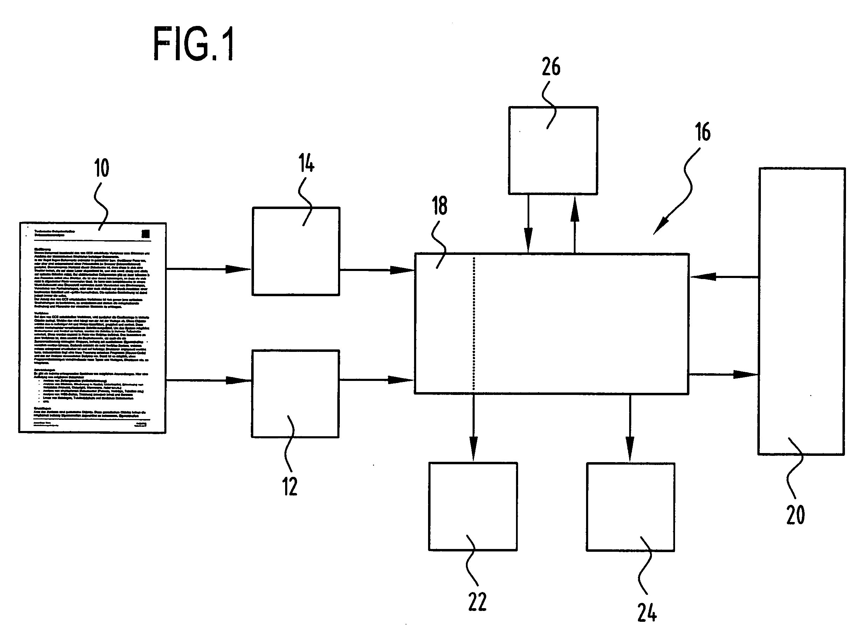

Ein zu analysierendes Dokument 10 kann in gedruckter Form oder in elektronischer Form vorliegen. Bei einer gedruckten Vorlage wird diese durch einen Scanner 12 gescannt (Figur 1). Bei einer elektronischen Vorlage wird diese durch einen virtuellen Druckertreiber 14 geführt, d. h. wird virtuell gedruckt. Über den virtuellen Druckertreiber 14 läßt sich die optische Erscheinung der Vorlage entsprechend einem Druckbild abbilden, ohne daß die elektronische Dokumentenstruktur (Programmstruktur), die formatabhängig sein kann und inhomogen sein kann, analysiert werden muß.

Die von dem virtuellen Druckertreiber 14 bzw. dem Scanner 12 gelieferten Vorlagedaten werden einer Analyseeinrichtung 16 zugeführt. Diese Analyseeinrichtung umfaßt dabei eine Zerlegungseinrichtung 18, mittels welcher die Vorlage ausgehend von den von dem virtuellen Druckertreiber 14 oder dem Scanner 12 bereitgestellten Vorlagedaten in elementare Struktureinheiten zerlegbar ist.

Die Analyseeinrichtung 16 umfaßt ferner eine Strukturerzeugungseinrichtung 20, mittels welcher ausgehend von den elementaren Struktureinheiten eine die Vorlage abbildende Struktur in elektronischem Format erzeugbar ist.

Das Analyseergebnis kann an eine Ausgabeeinrichtung wie einen Drucker 22 und/oder eine Speichereinrichtung 24 weitergegeben werden.

Die Analyseeinrichtung 16 kann eine oder mehrere Benutzerschnittstellen 26 aufweisen, über welche der Benutzer auf den Analysevorgang einwirken kann. Insbesondere kann der Benutzer über eine solche Benutzerschnittstelle 26 auch auf die Strukturerzeugungseinrichtung 20 eingreifen.

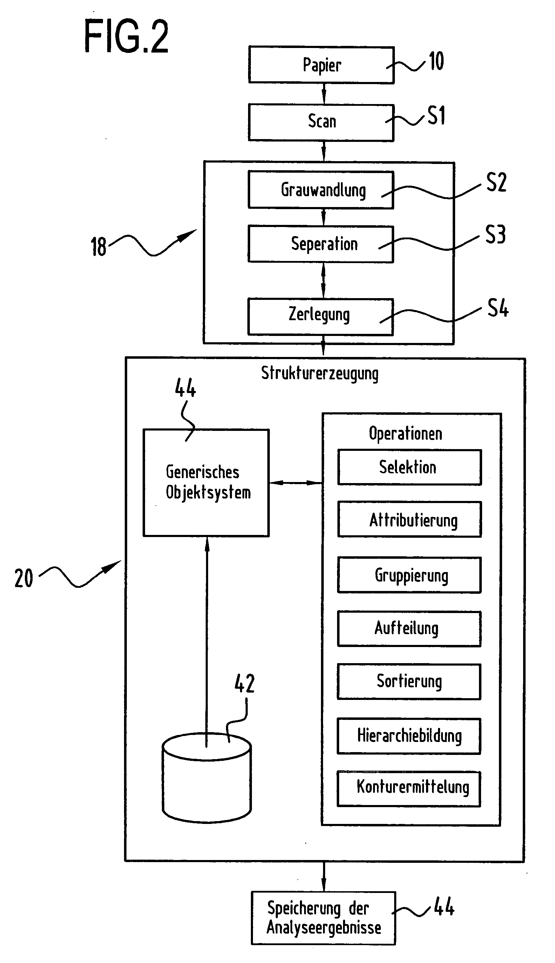

Im folgenden wird ein Ausführungsbeispiel des erfindungsgemäßen Verfahrens anhand der Strukturanalyse eines gedruckten Dokuments 10 beschrieben (Figur 2):

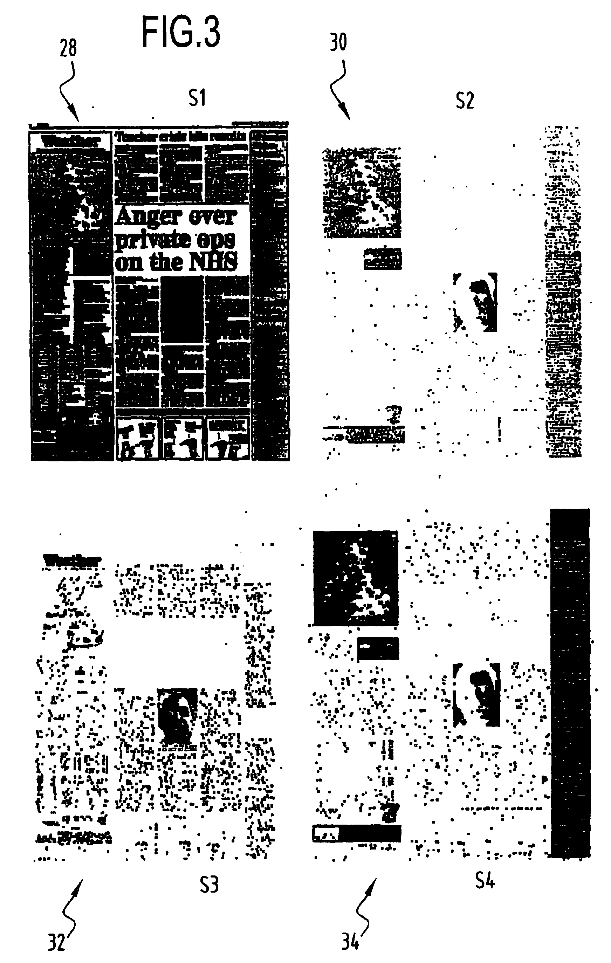

In einem Schritt S1 wird die Vorlage 10 durch den Scanner 12 gescannt. Dadurch liegt dann die Originalvorlage als elektronische Vorlage 28 mit Vorlagedaten (Figur 3) vor. Die Vorlagedaten sind Pixeldaten, das heißt Bilddaten, die in einer bestimmten Reihenfolge angeordnet sind.

In einem weiteren Schritt S2 werden Schwarz/Weiß-Bilder in Graubilder- 30 umgewandelt. Dadurch ist es möglich, gerasterte Hintergründe eben als Hintergründe zu erkennen und zu separieren. Beispielsweise werden bei der Grauwandlung Bilddateien in Zellen der Größe 4 auf 4 Pixel zerlegt. Für jede dieser Zellen wird dann ein Grauwert aus der Anzahl der darin enthaltenen Schwarzpixel ermittelt, woraus sich der entsprechende Grauwert ergibt. Es kann noch vorgesehen sein, daß die ermittelten Grauwerte mit denen von benachbarten Zellen gemittelt werden, um eine Glättung zu erreichen; dadurch werden beim Scannen auftretende Toleranzen ausgeglichen.

In einem weiteren Schritt S3 werden aus den erstellten Graubildern Flächen ermittelt, die einen ähnlichen Grauwert haben. Über die Prüfung insbesondere bezüglich Größe, Form und Grad der Füllung dieser Flächen läßt sich ein Hintergrund und ein Vordergrund ermitteln. Zellen, die eine stark abweichende Helligkeit haben, werden als Vordergrund gewertet. Es wird so ein virtuelles Bild 32 erzeugt, in dem gerasterte Texte ermittelt sind. Ferner wird ein virtuelles Bild 34 erzeugt, in dem Grau-Hintergründe ermittelt sind.

In einem weiteren Schritt S4 erfolgt dann insbesondere auf Grundlage der virtuellen Bilder 28, 30, 32, 34 eine Zerlegung in elementare Struktureinheiten, wobei Zeile für Zeile die Folgen von zusammenhängenden schwarzen Bildpunkten als Segmente ermittelt werden. Die elementaren Struktureinheiten sind dabei insbesondere Pixel.

Auf Basis dieser elementaren Struktureinheiten wird dann in der Strukturerzeugungseinrichtung 20 eine Strukturanalyse und damit Strukturerkennung und Layouterkennung der Vorlage 10 (basierend auf der Vorlage 28 in elektronischem Format) durchgeführt. Es wird dazu eine Struktur in elektronischem Format ausgehend von den elementaren Struktureinheiten erzeugt. Diese derart erzeugte Struktur bildet die optische Struktur der Vorlage 10 ab und stellt das Analyseergebnis des Dokuments 10 dar. Die Strukturerzeugung basiert dabei auf optischen Kriterien, d. h. auf der Struktur des Dokuments 10, welche auf einen Leser abgestimmt ist, d. h. auf die optische Erscheinung des Dokuments 10, und je nach Anwendung auch alternativ oder zusätzlich auf inhaltlichen Kriterien; diese inhaltlichen Kriterien werden durch Contentanalyse ermittelt.

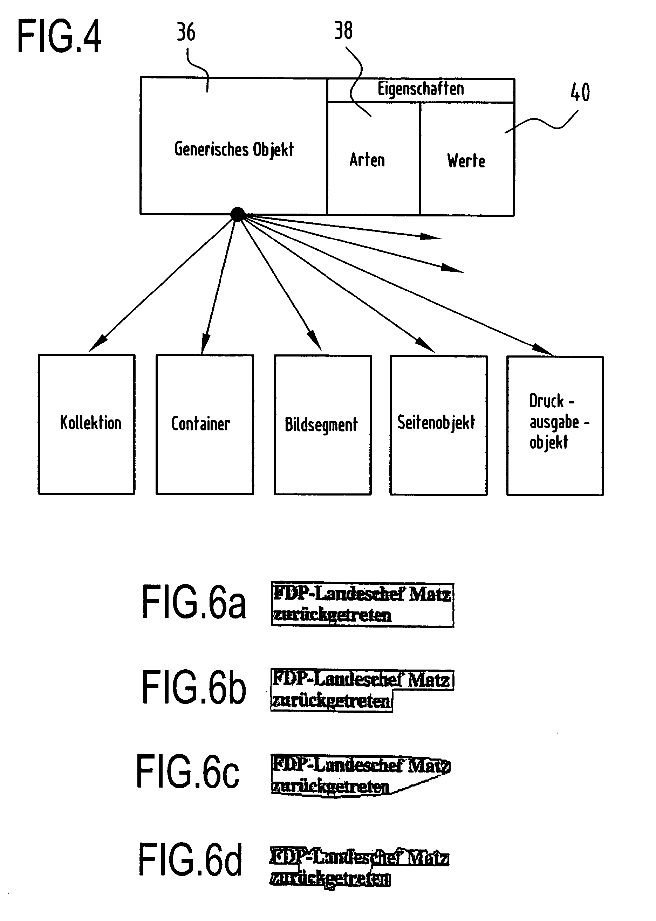

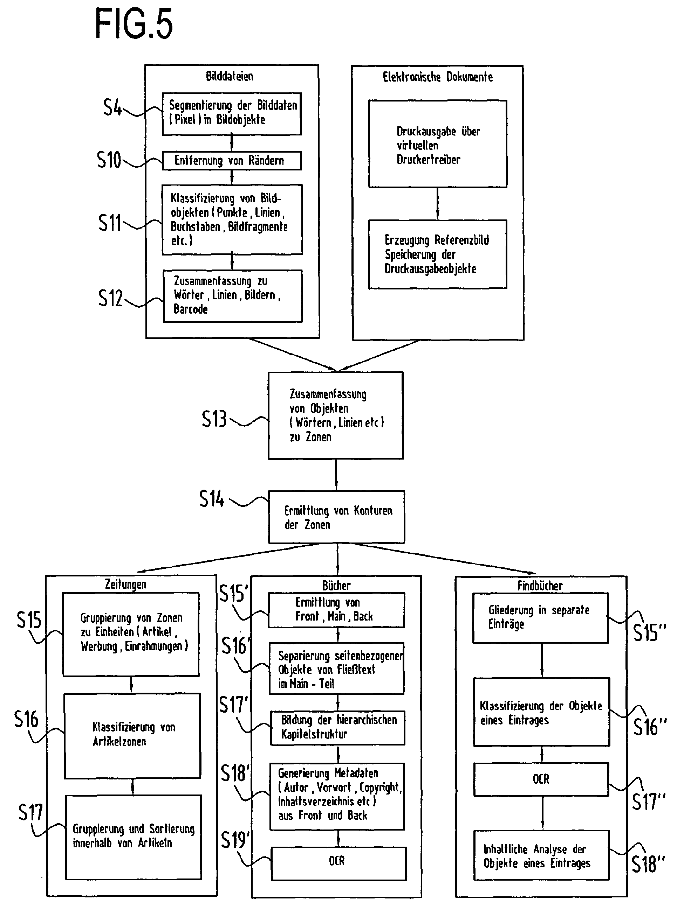

Die elementaren Struktureinheiten werden in der Strukturerzeugungseinrichtung 20 als Objekte 36 behandelt, denen eine oder mehrere Eigenschaften zugeordnet sind (Figur 4). Eine Eigenschaftszuordnung umfaßt dabei eine Artkomponente 38 für die Art bzw. den Namen der Eigenschaft und eine Wertkomponente 40 für den Wert der Eigenschaft. Solche Eigenschaften für eine elementare Struktureinheit sind beispielsweise die Position in der Vorlage 28 und/oder die Klassifizierung als Vordergrund oder Hintergrund.

Der Wert einer Eigenschaft kann beispielsweise ein Boolescher Wert, eine Zahl, eine Zeichenkette oder ein generisches Objekt sein.

Ausgehend von diesen Objekten wiederum werden generische Objekte erzeugt, denen ebenfalls eine oder mehrere Eigenschaften zugeordnet sind. Den generischen Objekten 36 können dabei grundsätzlich beliebig definierte Eigenschaften zugeordnet werden., um so ein flexibles System zu bilden.

An oder mit den generischen Objekten 36 und den elementaren Struktureinheiten werden dann Operationen durchgeführt, um ausgehend von den elementaren Struktureinheiten eine hierarchische Struktur in elektronischem Format zu erzeugen, welche das optische Erscheinungsbild des Dokuments 10 abbildet, wobei alternativ oder zusätzlich eine Contentanalyse vorgesehen sein kann.

An oder mit den generischen Objekten und den elementaren Struktureinheiten werden Operationen in Teilschritten durchgeführt, welche in der Form eines Skripts definiert sind. Dazu sind eine oder mehrere Skriptdatenbanken 42 vorgesehen. Als Skriptsprache wird beispielsweise TCL eingesetzt.

Ein Skript selber in der Skriptdatenbank 22 ist insbesondere klassifiziert. Das Skript kann parameterabhängig sein, so daß beispielsweise das gleiche Skript mit unterschiedlichen Parametern ausgeführt werden kann, wenn unterschiedliche Anwendungen oder unterschiedliche Typen von Vorlagen vorliegen.

Durch das in der Strukturerzeugungseinrichtung 18 implementierte generische Objektsystem 44, über das die elementaren Struktureinheiten und die darauf aufbauend erzeugten Objekte beliebig mit zusätzlich definierten Eigenschaften versehen werden können, läßt sich das System sehr flexibel ausgestalten und es lassen sich eine Vielzahl unterschiedlicher Vorlagen analysieren und sich dort Strukturen erkennen. Das System ist flexibel erweiterbar und kann auf die verschiedensten Arten von Strukturen angepaßt werden. Es läßt sich eine klare Trennung zwischen Programmcode und dem zur Analyse eingesetzten Skript aus der Skriptdatenbank 42 erreichen, so daß ohne Programmänderungen auch neue Arten von Vorlagen, Strukturen, Anwendungen und dergleichen integrierbar sind.

Wenn ein zu analysierendes Dokument 10 Text enthält, dann werden im Laufe der Strukturerzeugung generische Objekte erzeugt, die Textelemente umfassen. Es kann vorgesehen sein, daß einem solchen Objekt eine logische Funktionalität zugeordnet wird, die die Funktion der Textelemente im Dokument charakterisiert; beispielsweise kann solch ein generisches Objekt von der Funktion her ein Einzelbuchstabe sein oder auf einer höheren hierarchischen Ebene kann es sich um eine Überschrift handeln, um eine Einleitung beispielsweise eines Artikels, um einen Zwischentitel und so weiter. Von entscheidender Bedeutung sind dabei die Schriftgröße eines Textelementes und die Position des Textelementes innerhalb des Objekts. Bei vielen Anwendungen ist es sogar so, daß allein die Schriftgröße und die Position von Bedeutung sind. Linien und Graphiken können beispielsweise als Textelemente einer Schriftgröße "Null" charakterisiert werden.

Die die Vorlage abbildende Struktur läßt sich dann hierarchisch aufbauen, indem ausgehend von den logischen Funktionalitäten der generischen Objekte die Vorlage elektronisch aufgebaut wird.

An oder mit den elementaren Struktureinheiten und den weiteren generischen Objekten 36 lassen sich Operationen wie Selektion, Attributierung, Gruppierung, Aufteilung, Sortierung, Hierarchiebildung oder Konturermittlung durchführen, wobei die Aufzählung nicht abschließend ist.

Beispielsweise werden bei der Selektion einzelne Objekte aus einer vorgegebenen Menge an Objekten selektiert. Die Selektion erfolgt aufgrund verschiedener Bedingungen, die wiederum durch die Eigenschaften der Objekte der Menge bestimmt ist. Insbesondere kann es auch vorgesehen sein, daß die Objekte selber bestimmte Eigenschaften aufweisen müssen und diese Eigenschaften in bestimmten Relationen zu Eigenschaften benachbarter Objekte stehen.

Bei der Attributierung wird einem oder mehreren Objekten eine oder mehrere Eigenschaften zugeordnet. Durch das erfindungsgemäße generische Objektsystem 44 lassen sich dabei einem Objekt beliebig Attribute zuordnen. Eine solche Eigenschaft kann z. B. der Typ eines Objekts sein, um Objekte klassifizieren zu können. Es können auch neue Attribute dynamisch erzeugt werden.

Bei der Gruppierung werden Objekte, die gewissen Bedingungen genügen, d. h. bestimmte Eigenschaften aufweisen, zu Gruppen zusammengefaßt. Beispielsweise können Punkte, die in einem regelmäßigen Abstand zueinander stehen, zu einer gepunkteten Linie zusammengefaßt werden.

Bei der Aufteilung werden Objekte in mehrere separate Objekte zerlegt. Berührt beispielsweise eine Linie ein Bild, dann muß die Linie vom Bild abgetrennt und separat als Objekt gespeichert werden, d. h. das Objekt der Kombination aus Bild und Linie wird in ein getrenntes Bild-Objekt und ein getrenntes Linien-Objekt zerlegt.

Bei der Sortierung werden Objekte nach Eigenschaften sortiert. Beispielsweise werden Textblöcke einer Seite nach der Schriftgröße sortiert, um so ausgehend von den größten Schriften die hierarchischen Strukturen zu ermitteln, d. h. insbesondere zwischen Überschriften und Text selber unterscheiden zu können. Für die Sortierung können verschiedene Verfahren wie Quicksort, Bubblesort oder auch Hash-Verfahren eingesetzt werden.

Die Hierarchiebildung ist eine wesentliche Operation zur hierarchischen Erzeugung der Struktur in elektronischem Format. Es werden dabei Objekte anderen untergeordnet, d. h. es werden untergeordnete und übergeordnete Objekte gebildet. So werden ausgehend aus den elementaren Struktureinheiten (Segmenten) hierarchisch Buchstabenobjekte gebildet, aus den Buchstabenobjekten dann wiederum Wörterobjekte, aus den Wörterobjekten Zeilenobjekte und aus den Zeilenobjekten Absatzobjekte.

Für die Präsentation des Analyseergebnisses kann es wichtig sein, eine Konturermittlung beispielsweise von Textblöcken durchzuführen. Bei der Konturermittlung werden diejenigen Objekte, die dem Anwender als kleinste Einheit präsentiert werden sollen (wie beispielsweise Textblöcke) in ihrer Gesamtheit als Grundlage für die Berechnung der jeweiligen Kontur verwendet. Verfahren zur Konturermittlung werden weiter unten beschrieben.

Durch das generische Objektsystem 44 sind eine Vielzahl von Objekten und Objekttypen definierbar, wobei die Objekte durch Inhalt und Eigenschaften charakterisiert sind. Objekte und Objekttypen sind dabei grundsätzlich frei definierbar. Wichtige Objekte sind beispielsweise Objekte vom Typ "Kollektion"; solche Objekte sind in der Lage, beliebige andere Objekte aufzunehmen. Durch Objekte vom Typ "Kollektion" lassen sich beliebige Objekte gruppieren.

Ein generisches Objekt vom Typ "Container" beinhaltet Objekte der jeweils gleichen Kategorie. Über solche Objekte lassen sich Mechanismen wie Hierarchie und Vererbung abbilden, d. h. es läßt sich insbesondere eine hierarchische Struktur erzeugen.

Ein Speicherobjekt ist ein Objekt, welches Daten aufnimmt und bereitstellt und insbesondere nur zur Datenaufnahme und Datenbereitstellung dient.

Ein Dokumentenobjekt ist ein Objekt, welches ein komplettes Dokument spezifiziert. Über ein Dokumentenobjekt wird der Zugriff auf die Metadaten sowie die Dokumentenseite oder die Dokumentenseiten, wenn das Dokument mehrseitig ist, ermöglicht.

Ein Seitenobjekt ist ein Objekt, welches Bezug nimmt auf eine Seite eines Dokuments, und zwar insbesondere auf die Image-Seite des Dokuments. Es wird der Zugriff auf die Eigenschaften der Seite wie z. B. Seitengröße ermöglicht. Ferner wird der Zugriff auf Bilddaten und insbesondere einzelne Pixel ermöglicht.

Ein Objekt vom Typ Bildsegment bezieht sich auf zusammenhängende Folgen von Pixeln innerhalb einer Bildseite.

Ein Druckausgabeobjekt ist ein Objekt, welches den Zugriff auf die entsprechenden Daten einer Vorlage ermöglicht, welche mittels des "virtuellen Druckertreibers" virtuell gedruckt wurde. Informationen wie Schrift, Schriftart, Text (die das Druckbild bestimmen) usw. wurden dabei direkt entnommen und sind in dem Druckausgabeobjekt gespeichert.

Ausgehend von den elementaren Struktureinheiten (Segmente), in die die Vorlage zerlegt wurde, wird mittels der Strukturerzeugungseinrichtung 20 hierarchisch die Struktur der Vorlage abgebildet. Es werden dazu den elementaren Struktureinheiten Eigenschaften zugeordnet. Ferner werden generische Objekte gebildet, denen ebenfalls eine oder mehrere Eigenschaften zugeordnet sind. Die zugeordneten Eigenschaften sind dabei insbesondere durch Anordnung und/oder Bedeutung und/oder Hierarchie im optischen Erscheinungsbild der Vorlage bestimmt. An oder mit den elementaren Struktureinheiten und den generischen Objekten werden wiederum die oben genannten Operationen durchgeführt.

Die Abbildung der Struktur erfolgt sowohl unter Berücksichtigung optischer Kriterien, d.h. durch Analyse des Layouts der Vorlage. Es können aber auch zusätzlich inhaltliche Eigenschaften (Content) der Vorlage bei der Strukturerzeugung zugrunde gelegt.

In Figur 5 ist schematisch der Ablauf für eine konkrete Verfahrensdurchführung gezeigt:

Bei einer gedruckt vorliegenden Vorlage (Bilddatei) wird nach dem Scannen die Segmentierung der Bilddaten insbesondere in Pixel durchgeführt. Diese derart gebildeten elementaren Struktureinheiten werden als Eigenschaften insbesondere ihrer Position in der Vorlage zugeordnet.

In einem weiteren Schritt S10 werden Ränder entfernt, um für die Struktur irrelevante Bestandteile der Vorlage zu eliminieren.

Es wird dann eine Klassifizierung von Bildobjekten beispielsweise in Punkte, Linien, Buchstaben, Bildfragmente in einem Schritt S11 durchgeführt. Es werden dadurch Objekte gebildet, die entsprechend klassifiziert sind. Die Objekte wiederum werden sortiert und in einem Schritt S12 zusammengefaßt, beispielsweise zu Wörtern, Linien, Bildern, Barcode usw.

Diese Objekte werden dann hierarchisch zu übergeordneten Objekten zusammengefaßt. Beispielsweise werden Wörter oder Linien zu Zonen zusammengefaßt. Bei der Zusammenfassung von Wörtern ist eine solche Zone ein Textblock. Diese Zusammenfassung erfolgt in einem Schritt S13.

In einem Schritt S14 wird die Kontur einer solchen Zone (wie beispielsweise eines Textblocks) ermittelt, um die Darstellung zu vereinfachen.

Die Weiterverarbeitung der Zonenobjekte - mit oder ohne Konturermittlung - kann dann in Abhängigkeit von der Art der Vorlage erfolgen. Bei einer Zeitung als Vorlage werden beispielsweise in einem Schritt S15 die Zonen zu übergeordneten Einheiten wie Artikeln, Werbung oder Einrahmungen gruppiert. In einem Schritt S16 werden die entsprechenden Zonen wie beispielsweise Artikelzonen klassifiziert. In einem Schritt S17 erfolgt eine Gruppierung und Sortierung innerhalb von Artikeln.

Bei Büchern wird in einem Schritt S15' eine Ermittlung bezüglich Front, Main, Back durchgeführt, um Umschlagseiten und Hauptteil des Buches bestimmen zu können.

In einem Schritt S16' werden beispielsweise seitenbezogene Objekte vom Fließtext im Main-Teil der Vorlage separiert. Es läßt sich dann in einem Schritt S17' eine hierarchische Kapitelstruktur bilden. In einem Schritt S18' werden Metadaten gebildet, die beispielsweise Titel, Autor, Herausgeber, Vorwort, Copyright-Vermerk, Inhaltsverzeichnis und dergleichen umfassen, wobei diese Metadaten aus den Objekten Front und Back generiert werden.

In einem Schritt S19' wird eine Texterkennung (OCR) durchgeführt.

Bei Findbüchern, Katalogen und Telefonbüchern wird in einem Schritt S15" eine Gliederung in separate Einträge durchgeführt. In einem Schritt S16" werden die Objekte eines Eintrags klassifiziert. In einem Schritt S17" wird eine Texterkennung pro Eintrag durchgeführt. In einem Schritt S18" wird eine inhaltliche Analyse der Objekte eines Eintrags durchgeführt.

Als Endergebnis wird die Analyse in einem Speicher 44 (Figur 2) gespeichert. Es werden dabei insbesondere die relevanten Ergebnisse der Analyse gespeichert, d. h. irrelevante Informationen wurden zuvor herausgefiltert. Beispielsweise werden die Analyseergebnisse in einer XML-Struktur abgespeichert. Das Analyseergebnis, d. h. die die Vorlage abbildende Struktur, liegt dabei in elektronischer Form vor und ist somit der speicherplatzminimierten Speicherung und auch weiteren elektronischen Analysen zugänglich.

Bei dem erfindungsgemäßen Verfahren wird mit Hilfe der generischen Objekte ausgehend von den elementaren Struktureinheiten die gespeicherte Struktur hierarchisch gebildet. Die Operationen an oder mit den elementaren Struktureinheiten und den generischen Objekten sind beliebig kombinierbar. Durch das Vorsehen einer Skriptdatenbank 42 läßt sich das System flexibel ausgestalten.

Durch Konturermittlung an zu Zonen zusammengefaßten Objekten wie Textblöcken lassen sich die Ergebnisse einem Anwender optimal präsentieren.

Es kann beispielsweise vorgesehen sein, wie in Figur 6(a) angedeutet, daß um eine Zone (im gezeigten Beispiel ein Textblock) ein Rechteck gelegt wird, welches die enthaltenen Objekte umschließt.

Es ist auch möglich, wie in Figur 6(b) angedeutet, einen Rechteckblock um das Objekt zu legen, bei dem in der Zone Zeilen bestimmt werden und die Rechteckkoordinaten der Objekte und insbesondere Wörter innerhalb der Zeile ausgewertet werden. Die Zeile wird mit einem Rechteck umschlossen. Dieses Rechteck wird mit seinen Konturen an die Kontur des Rechtecks der benachbarten Zeile angepaßt. Es ergibt sich dadurch eine treppenartige Rechteckblockkontur, wenn die Zeilen unterschiedliche Längen haben.

Es kann dabei vorgesehen sein, daß eine Kantenglättung in der Konturermittlung durchgeführt wird, um kleine Stufen zu eliminieren.

Es ist auch möglich, um die Zone eine konvexe Hülle zu legen, wie in Figur 6(c) angedeutet. Bei einer konvexen Hülle wird die Zone mit geraden Linien umschlossen, wobei sich der Winkel zwischen benachbarten Linien nur in eine Richtung ändern darf.

Bei der Abrollkontur, welche in Figur 6(d) angedeutet ist und welche auch als Alpha-Kontur bezeichnet wird, "rollt" ein elektronischer Markierer einer bestimmten Größe an der Zone ab. Die entsprechenden "Abrollinien" sind dabei gerade Linien, die eben durch die Größe des Markierers bestimmt sind. Bei der Alpha-Kontur ist enges Anliegen an die Objekte gewährleistet, d. h. die Fläche innerhalb der Kontur ist minimiert.

Oben wurde das erfindungsgemäße Verfahren beschrieben, wenn eine gedruckte Vorlage vorhanden ist. Die elementaren Struktureinheiten sind dann Bildpixel; durch einen Scannvorgang werden Vorlagedaten erzeugt, die im wesentlichen Pixeldaten sind, die in einer bestimmten Reihenfolge entsprechend der Vorlage angeordnet sind.

Wenn die Vorlage bereits in elektronischem Format vorliegt, wie es beispielsweise bei einer Web-Seite der Fall ist, dann können die elementaren Struktureinheiten auf einer höheren Ebene als der Pixelebene angesetzt werden, zumindest außerhalb von Bilddateien. Die Vorlage weist eine bestimmte optische Struktur auf, die sich in der Datenstruktur der Vorlage widerspiegelt. Das Dokument wird dann durch den virtuellen Druckertreiber 14 "virtuell" gedruckt: Es werden Vorlagedaten erzeugt, die in der Art eines Druckbildes die Vorlage optisch abbilden, wobei die Daten in einem durch die erfindungsgemäße Vorrichtung verarbeitbaren Format vorliegen. Das "virtuelle" Drucken durch den virtuellen Druckertreiber 14 hat den Vorteil, daß die elektronische Dokumentenstruktur selber nicht analysiert werden muß, das heißt daß das Dokument nicht konvertiert werden muß, sondern daß nur die optische Struktur abgebildet wird.

Es kann dabei vorgesehen sein, daß zusätzlich Pixeldaten generiert werden, um diese beispielsweise einem Benutzer anzeigen zu können.

Die durch den virtuellen Druckertreiber 14 erzeugten Vorlagedaten werden dann in elementare Struktureinheiten zerlegt, die optisch bestimmt werden. Textelemente wie Buchstaben oder sogar ganze Wörter lassen sich optisch bestimmen und sind damit als solche in den Vorlagedaten enthalten, die durch den virtuellen Druckertreiber 14 geliefert werden. Diese Textelemente können dann als elementare Struktureinheiten dienen, um auf deren Grundlage die Struktur des ursprünglichen Dokumentes hierarchisch abzubilden. Bezüglich solcher Textelemente liegt also die Ebene der elementaren Struktureinheiten oberhalb der Pixelebene. Die Strukturabbildung läßt sich dann schneller durchführen, da weniger Rechenaufwand notwendig ist, da eben auf einer höheren Ebene eingestiegen wird.

## Patentansprüche

1. Verfahren zur Strukturanalyse eines Dokuments, bei dem eine Vorlage in elementare Struktureinheiten zerlegt wird und ausgehend von diesen elementaren Struktureinheiten generische Objekte erzeugt werden, denen eine oder mehrere Eigenschaften zugeordnet werden, wobei mittels der generischen Objekte eine die Vorlage abbildende Struktur in elektronischem Format erzeugt wird.

2. Verfahren nach Anspruch 1, **dadurch gekennzeichnet, daß** die optische Struktur der Vorlage analysiert wird.

3. Verfahren nach Anspruch 1 oder 2, **dadurch gekennzeichnet, daß** eine inhaltliche Analyse erfolgt.

4. Verfahren nach einem der vorangehenden Ansprüche, **dadurch gekennzeichnet, daß** den elementaren Struktureinheiten eine oder mehrere Eigenschaften zugeordnet werden.

5. Verfahren nach einem der vorangehenden Ansprüche, **dadurch gekennzeichnet, daß** eine zugeordnete Eigenschaft durch Anordnung und/oder Bedeutung und/oder Hierarchie im optischen Erscheinungsbild der Vorlage bestimmt wird.

6. Verfahren nach einem der vorangehenden Ansprüche, **dadurch gekennzeichnet, daß** die Eigenschaft oder Eigenschaften, welche einem generischen Objekt zugeordnet werden, definierbar sind.

7. Verfahren nach Anspruch 6, **dadurch gekennzeichnet, daß** die Anzahl der zugeordneten Eigenschaften definierbar ist.

8. Verfahren nach Anspruch 6 oder 7, **dadurch gekennzeichnet, daß** die Art einer zugeordneten Eigenschaft definierbar ist.

9. Verfahren nach einem der vorangehenden Ansprüche, **dadurch gekennzeichnet, daß** einem generischen Objekt oder einer elementaren Struktureinheit beliebige zusätzliche Eigenschaften zugeordnet werden können.

10. Verfahren nach einem der vorangehenden Ansprüche, **dadurch gekennzeichnet, daß** eine einem generischen Objekt zugeordnete Eigenschaft eine Artkomponente für die Art der Eigenschaft und eine Wertkomponente für den Wert der Eigenschaft umfaßt.

11. Verfahren nach einem der vorangehenden Ansprüche, **dadurch gekennzeichnet, daß** einem generischen Objekt eine logische Funktionalität zugeordnet wird.

12. Verfahren nach Anspruch 11, **dadurch gekennzeichnet, daß** die logische Funktionalität durch Schriftgröße von Textelementen und Position der Textelemente, welche von dem generischen Objekt umfaßt werden, bestimmt wird.

13. Verfahren nach einem der vorangehenden Ansprüche, **dadurch gekennzeichnet, daß** an oder mit elementaren Struktureinheiten und/oder generischen Objekten Operationen durchgeführt werden.

14. Verfahren nach Anspruch 13, **dadurch gekennzeichnet, daß** an oder mit den elementaren Struktureinheiten und/oder generischen Objekten eine oder mehrere der Operationen Selektion, Attributierung, Gruppierung, Aufteilung, Sortierung, Hierarchiebildung oder Konturermittlung durchgeführt wird.

15. Verfahren nach einem der vorangehenden Ansprüche, **dadurch gekennzeichnet, daß** ausgehend von den elementaren Struktureinheiten die die Vorlage abbildende Struktur hierarchisch erzeugt wird.

16. Verfahren nach Anspruch 15, **dadurch gekennzeichnet, daß** hierarchisch übergeordnete Objekte durch eine oder mehrere der Operationen Selektion, Attributierung, Gruppierung, Aufteilung, Sortierung, Hierarchiebildung oder Konturermittlung aus hierarchisch untergeordneten Objekten erzeugt werden.

17. Verfahren nach einem der Ansprüche 13 bis 16, **dadurch gekennzeichnet, daß** Operationen bezüglich der elementaren Struktureinheiten und/oder der generischen Objekte mittels durch ein Skript definierte Teilschritte durchgeführt werden.

18. Verfahren nach Anspruch 17, **dadurch gekennzeichnet, daß** das Skript in einer oder mehreren Skriptdatenbanken gespeichert ist.

19. Verfahren nach Anspruch 17 oder 18, **dadurch gekennzeichnet, daß** ein Skript in Klassen aufgeteilt wird.

20. Verfahren nach einem der Ansprüche 17 bis 19, **dadurch gekennzeichnet, daß** ein parameterabhängiges Skript vorgesehen wird.

21. Verfahren nach einem der vorangehenden Ansprüche, **dadurch gekennzeichnet, daß** ein generisches Objekt vom Typ "Kollektion" vorgesehen ist, welches andere Objekte aufnehmen kann.

22. Verfahren nach einem der vorangehenden Ansprüche, **dadurch gekennzeichnet, daß** ein generisches Objekt vom Typ "Container" vorgesehen ist, welches Objekte einer gleichen Kategorie beinhaltet.

23. Verfahren nach einem der vorangehenden Ansprüche, **dadurch gekennzeichnet, daß** ein generisches Objekt vom Typ "Speicher" vorgesehen ist, welches Daten aufnimmt und bereitstellt.

24. Verfahren nach einem der vorangehenden Ansprüche, **dadurch gekennzeichnet, daß** ein generisches Objekt vom Typ "Dokument" vorgesehen ist, welches eine Vorlage spezifiziert.

25. Verfahren nach einem der vorangehenden Ansprüche, **dadurch gekennzeichnet, daß** ein generisches Objekt vom Typ "Seite" vorgesehen ist, welches eine Seite der Vorlage charakterisiert.

26. Verfahren nach einem der vorangehenden Ansprüche, **dadurch gekennzeichnet, daß** ein generisches Objekt vom Typ "Bildsegment" vorgesehen ist, welches sich auf zusammenhängende Folgen von Pixeln innerhalb einer Bildseite bezieht.

27. Verfahren nach einem der vorangehenden Ansprüche, **dadurch gekennzeichnet, daß** die Vorlage eine gedruckte Vorlage ist.

28. Verfahren nach Anspruch 27, **dadurch gekennzeichnet, daß** die elementaren Struktureinheiten Pixeldaten sind.

29. Verfahren nach einem der Ansprüche 1 bis 26, **dadurch gekennzeichnet, daß** die Vorlage auf einem elektronischen Dokument basiert und Vorlagedaten durch einen virtuellen Druckertreiber erzeugt werden.

30. Verfahren nach Anspruch 29, **dadurch gekennzeichnet, daß** der virtuelle Druckertreiber Vorlagedaten auf Grundlage der optischen Struktur der Vorlage erzeugt.

31. Verfahren nach Anspruch 29 oder 30, **dadurch gekennzeichnet, daß** die elementaren Struktureinheiten von mittels eines virtuellen Druckertreibers erzeugten Vorlagedaten zumindest teilweise oberhalb einer Pixelebene liegen.

32. Verfahren nach einem der vorangehenden Ansprüche, **dadurch gekennzeichnet, daß** für ein Objekt eine Konturermittlung durchgeführt wird.

33. Verfahren nach Anspruch 32, **dadurch gekennzeichnet, daß** um das Objekt ein Rechteck als Kontur gelegt wird.

34. Verfahren nach Anspruch 32 oder 33, **dadurch gekennzeichnet, daß** um das Objekt ein Rechteckblock als Kontur gelegt wird.

35. Verfahren nach Anspruch 32 oder 33, **dadurch gekennzeichnet, daß** um das Objekt eine konvexe Hülle als Kontur gelegt wird.

36. Verfahren nach Anspruch 32 oder 33, **dadurch gekennzeichnet, daß** um das Objekt eine Abrollkontur gelegt wird.

37. Verfahren nach einem der vorangehenden Ansprüche, **dadurch gekennzeichnet, daß** nach einem Scannvorgang einer Vorlage Schwarz/Weiß-Bilder in Graubilder umgewandelt werden.

38. Verfahren nach Anspruch 37, **dadurch gekennzeichnet, daß** zur Ermittlung von Vordergrund und Hintergrund Graubilder mit gleichem oder ähnlichem Grauwert verglichen werden.

39. Einrichtung zur automatischen Strukturanalyse von Dokumenten (10) und insbesondere zur Durchführung des Verfahrens gemäß einem der vorangehenden Ansprüche, umfassend eine Zerlegungseinrichtung (18) zur Zerlegung einer Vorlage in elementare Struktureinheiten und eine Strukturerzeugungseinrichtung (20) zur Erzeugung einer die Vorlage abbildenden Struktur in elektronischem Format, wobei die Strukturerzeugungseinrichtung (20) eine Einrichtung zum Erzeugen von generischen Objekten, welchen eine oder mehrere Eigenschaften zugeordnet sind oder werden, und zur Durchführung von Operationen an oder mit den generischen Objekten und/oder den elementaren Struktureinheiten umfaßt.

40. Einrichtung nach Anspruch 39, **dadurch gekennzeichnet, daß** die Erzeugung von generischen Objekten und/oder Operationen an oder mit generischen Objekten und/oder elementaren Struktureinheiten auf optischen Kriterien beruht.

41. Einrichtung nach Anspruch 39 oder 40, **dadurch gekennzeichnet, daß** eine Skriptdatenbank (42) für Operationen mit oder an generischen Objekten und/oder elementaren Struktureinheiten vorgesehen ist.

42. Einrichtung nach einem der Ansprüche 39 bis 41, **dadurch gekennzeichnet, daß** ein virtueller Druckertreiber (14) zur Erzeugung von Vorlagedaten auf Basis einer Vorlage in elektronischem Format vorgesehen ist.

43. Computerprogramm-Produkt mit mindestens einem computerlesbaren Medium und einem auf dem mindestens einen computerlesbaren Medium gespeicherten Computerprogramm mit Programmcodemitteln, die dazu geeignet sind, bei Ablauf des Computerprogramms auf einem oder mehreren Computern das Verfahren nach einem der Ansprüche 1 bis 38 auszuführen.

44. Computerprogramm mit Programmcodemitteln, die dazu geeignet sind, bei Ablauf des Computerprogramms auf einem oder mehreren Computern das Verfahren nach einem der Ansprüche 1 bis 38 auszuführen.
